# FASCICULE DE BREVET EUROPEEN

(11) **EP 0 314 589 B1**
(45) Date de publication et mention de la délivrance du brevet: **07.01.1993**
(21) Numéro de dépôt: 88420369.6
(22) Date de dépôt: 27.10.1988
(51) Int. Cl.: H02G 9/02

(54) **Dispositif avertisseur de canalisations enterrées**
Warnvorrichtung für im Erdreich verlegte Rohre
Warning device for buried conduits

(30) Priorité: 28.10.1987 FR 8715325; 10.02.1988 FR 8801818; 28.07.1988 FR 8810526
(43) Date de publication de la demande: 03.05.1989
(73) Titulaire: PLYMOUTH FRANCAISE, 69320 Feyzin (FR)
(72) Inventeur: Bui Duc, Hao, F-69100 Villeurbanne (FR)
(74) Mandataire: Maureau, Philippe

(56) Documents cités:
- EP-A- 0 140 797
- EP-A- 0 239 510
- DE-A- 2 428 740
- US-A- 3 908 582

## Description

La présente invention a pour objet un dispositif avertisseur de canalisations enterrées.

Pour faciliter, lors de fouilles, la signalisation et le repérage des canalisations enterrées, il est habituel d'enterrer, au-dessus des canalisations, des dispositifs de signalisation se présentant, le plus souvent, sous la forme de grillages réalisés en matière synthétique.

Il est, en outre, connu d'associer à ces grillages des éléments en forme de bandes longitudinales continues et rectilignes qui ont des résistances à l'allongement et à la rupture différentes de celles du grillage.

Cette association, qui est destinée à faciliter la signalisation lorsque les fouilles sont faites à la pelle mécanique, ne permet pas toujours en fait d'atteindre ce but. L'expérience prouve, en effet, que souvent, lors de la rupture du grillage et des bandes par le godet de la pelle, les morceaux de bande arrachés par le godet disparaissent dans les matériaux saisis, et les bandes restant sur les parois de la fouille peuvent être peu visibles.

Si tel est le cas, le dispositif de signalisation ne joue plus qu'imparfaitement son rôle, et le conducteur de la pelle peut ne pas voir le dispositif de signalisation et ainsi ne pas être alerté de la présence d'une canalisation sous-jacente.

Il en est d'ailleurs de même lorsque la fouille est faite dans un terrain meuble qui, en s'éboulant de lui-même, masque les deux extrémités de chaque bande, en les dissimulant à la vue du conducteur.

Il arrive enfin que le godet de la pelle découpe de façon très nette les bandes associées au grillage ; le conducteur ne voit alors les bandes ni dans les parois de la fouille, ni dans la masse de matériaux contenue dans la pelle. Malgré leur intérêt, les bandes longitudinales associées au grillage ne permettent donc pas de garantir, systématiquement, lors des fouilles, notamment lors des fouilles réalisées à la pelle mécanique, une signalisation certaine des canalisations placées sous le grillage.

Le brevet français 83 14438 au nom de la Demanderesse a proposé des solutions pour pallier les difficultés énoncées précédemment. Ce brevet décrit un matériau de repérage du type précité, et dans lequel l'élément de repérage est constitué par au moins une bande rectiligne, mais discontinue, réalisée en une matière ayant une bonne résistance à la rupture et associée a un support ayant une faible résistance à la rupture.

Diverses matières sont utilisables pour réaliser la ou les bandes entrant dans la constitution de ce matériau de repérage. C'est ainsi que peuvent notamment être utilisées des matières synthétiques orientées ou non, des fibres tissées ou non.

Quant au support de cette ou de ces bandes, il peut aussi être réalisé en diverses matières, telles que :
- chlorure de polyvinyle, polyéthylène, polypropylène, fibres synthétiques,
- coton...
et il peut se présenter sous diverses formes :
- film perforé ou non,
- grillage,
- nappe : tissée ou non
ou autres supports du type de ceux utilisés pour la stabilisation des sols.

Les différentes formes d'exécution décrites dans le brevet précité permettent d'atteindre le but recherché, mais ont toutes, en commun, une mauvaise aptitude à la pose mécanisée des canalisations enterrées dans laquelle le système de signalisation étant saisi par l'outil, la traction exercée sur lui provoque successivement son allongement et sa rupture ; ce qui provoque la séparation de la ou des autres bandes qui sont non pas continues, mais discontinues. Il en résulte que des morceaux de bandes se trouvent alors séparés. Ce sont précisément ces morceaux de bandes qui, constituant des éléments de signalisation, apparaissent très visiblement hors des parois d'une tranchée, hors d'un talus d'éboulement ou hors du godet d'une pelle.

Le document DE-A-2 428 740 concerne un dispositif avertisseur de canalisations enterrées comprenant au moins une bande de signalisation réalisée en matériau souple et ayant une bonne résistance à la rupture, logée à l'intérieur d'une gaine continue.

La présente invention vise a remédier à ces inconvénients en fournissant un dispositif de signalisation et de repérage de canalisations enterrées, susceptible d'être posé mécaniquement.

A cet effet, le dispositif qu'elle concerne comprenant au moins une série d'éléments de signalisation constitués par des tronçons de bandes allongées réalisées en un matériau souple et ayant une bonne résistance à la rupture, chaque série de tronçons de bande étant logée à l'intérieur d'une enveloppe continue, est caractérisé en ce que l'enveloppe continue est constituée par une gaine, et en ce qu'il comporte au moins deux gaines parallèles et solidaires l'une de l'autre, dont l'une sert au logement d'une bande continue, formant élément de signalisation, de structure homogène sur toute sa longueur, réalisée en un matériau souple et ayant une bonne résistance à la rupture, et dont chacune des autres sert au logement d'une série de tronçons de bandes.

Selon une forme préférée d'exécution, ce dispositif comprend trois gaines parallèles solidaires les unes des autres, dont la gaine centrale sert de logement à une bande continue, et dont les deux gaines latérales servent de logements à deux séries d'éléments de signalisation constituées par des tronçons de bande.

Il est ainsi possible de bénéficier à la fois des avantages procurés par les éléments de signalisation discontinus, et des avantages procurés par un élément de signalisation continu, ce dernier élément cassant sous l'action du godet de la pelle, et demeurant dans la tranchée, ce qui permet une visualisation de la présence du dispositif avertisseur.

Les différents éléments de signalisation d'une même série sont constitués par plusieurs tronçons de bandes séparés les uns des autres, ou par plusieurs tronçons d'une même bande séparés les uns des autres par des lignes de prédécoupe ou de rupture, régulièrement réparties sur la longueur de la bande.

Selon une première possibilité, les gaines contenant des éléments de signalisation sont réalisées à partir de deux rubans continus de matière synthétique, réunis l'un à l'autre après positionnement des éléments de signalisation par des soudures longitudinales, le nombre de soudures étant égal au nombre de rubans augmenté de un.

Selon une autre possibilité, les gaines contenant des éléments de signalisation sont réalisées à partir d'un ruban continu de matière synthétique, replié sur lui-même le long d'une ligne centrale et longitudinale, après positionnement des éléments de signalisation, les deux épaisseurs du ruban étant réunies l'une à l'autre par des soudures longitudinales dont le nombre est égal au nombre de gaines.

Il peut s'agir de soudures thermiques, haute-fréquence, avec ou sans apport de matière, en fonction du matériau utilisé qui peut être par exemple choisi parmi les chlorure de polyvinyle, polyéthylène, polypropylène, polyester, etc... .

Conformément à une autre caractéristique de ce dispositif, celui-ci comprend des éléments de détection, tels qu'éléments conducteurs, fil métallique isolé ou non, système magnétique, système électronique ou système inductif, disposés dans une gaine ou sous un film solidaire des gaines contenant les éléments de signalisation, ou dans la masse du matériau constitutif du dispositif avertisseur.

Les éléments de détection sont constitués soit par des éléments métalliques ou métallisés, soit par des éléments magnétiques, disposés de façon répétitive, selon un ordre et/ou à un pas, et/ou une orientation et/ou selon une répartition pré-établie, afin que ces éléments puissent être détectés d'une manière sélective par des détecteurs spécifiques conçus à cet effet.

Il est ainsi possible, à l'aide d'un magnétomètre, de déceler, depuis la surface du sol, la présence d'un dispositif avertisseur et de déterminer, en fonction du codage, la nature de la canalisation enterrée : conduit d'eau, fourreau de câble conducteur électrique, fourreau de câble téléphone, etc... .

Les éléments magnétiques peuvent être constitués par des aimants en forme de fil de matériaux ayant des propriétés magnétiques, par des éléments parallèlépipèdiques ou cylindriques à base d'oxyde de fer magnétique ou en d'autres matériaux aux propriétés de détection durables.

De toute façon, l'invention sera bien comprise à l'aide de la description qui suit, en référence au dessin schématique annexé représentant, à titre d'exemple non limitatif, une forme d'exécution de ce dispositif de signalisation :
Figure 1 est une vue de côté d'une charrue-taupe destinée à la mise en place d'une canalisation et d'un dispositif de signalisation ;
Figures 2 et 3 sont deux vues en perspective, respectivement, d'une tranchée et du godet d'une pelle mécanique laissant apparaître des éléments de signalisation ;
Figure 4 est une vue de dessus, partiellement arrachée, d'un dispositif de signalisation ;
Figure 5 en est une vue en coupe transversale, selon la ligne V-V de figure 4.

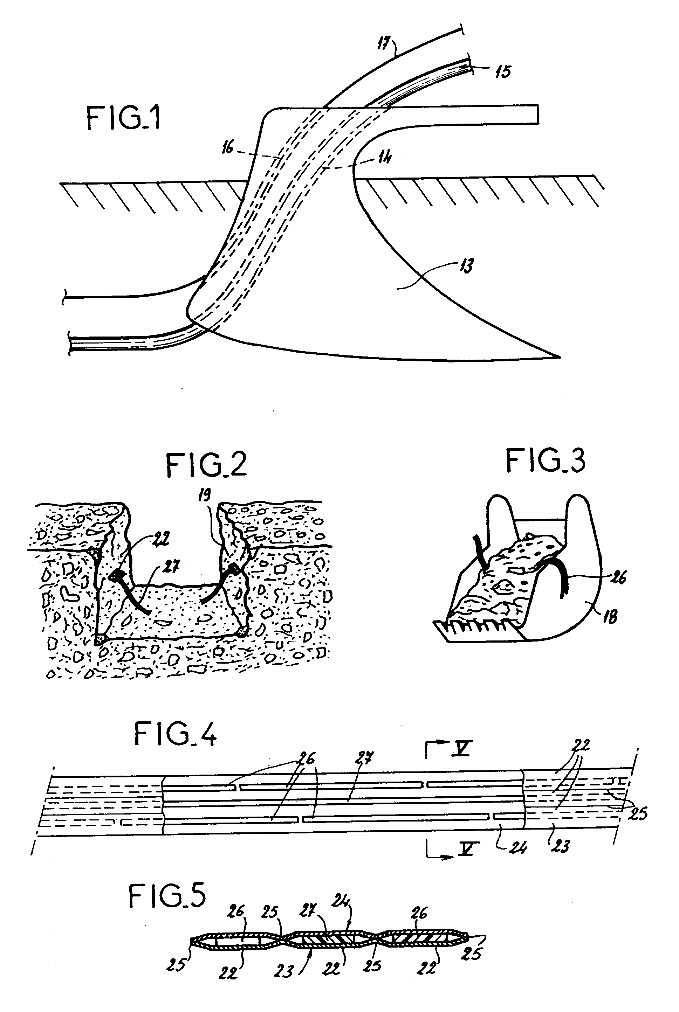

Le dispositif avertisseur, représenté aux figures 4 et 5, comprend trois gaines **22** continues, constituées par un ruban inférieur **23** et un ruban supérieur **24** réunis l'un à l'autre par quatre soudures longitudinales **25** délimitant les trois gaines **22**. Chacune des deux gaines latérales contient plusieurs tronçons de bande **26** disposés dans le prolongement les uns des autres, chaque tronçon de bande réalisé en un matériau souple et possèdant une bonne résistance à la rupture pouvant avoir, par exemple, une longueur de 1,70 mètre et une largeur de l'ordre de 1 cm.

Pour sa part, la gaine centrale contient une bande continue **27** de structure homogène sur toute sa longueur, réalisée en un matériau souple et ayant une bonne résistance à la rupture.

La figure 1 représente le soc **13** d'une charrue-taupe, comportant non seulement un conduit **14** pour le passage de la canalisation **15** à enterrer, mais aussi un conduit **16** pour le passage du dispositif de signalisation désigné à cette figure par la référence générale **17**.

Ce dispositif de signalisation remplit parfaitement son rôle lors de l'exécution d'une fouille ou d'une tranchée par une pelle mécanique. Lorsque le godet **18** de la pelle prélève la terre dans la tranchée **19**, il exerce sur le dispositif une traction suffisante pour provoquer une rupture des gaines **22**. Si le godet de la pelle fait remonter tous les tronçons de bande adjacents **26**, la bande continue **27** qui sera cassée demeurera toujours visible dans le fond de la tranchée.

Ce dispositif avertisseur présente donc une double capacité de signalisation, d'une part, à l'aide des tronçons de bande **26** susceptibles d'être facilement accrochés par l'outil avec lequel est réalisée la tranchée et, d'autre part, à l'aide de la ou des bandes continues qui sont cassées par l'outil et qui demeurent dans le fond de la tranchée.

Comme il ressort de ce qui précède, l'invention apporte une grande amélioration à la technique existante en fournissant un dispositif de structure simple se présentant à l'origine sous une forme continue permettant une pose mécanisée, tout en bénéficiant des qualités de repérage fournies d'une part par des éléments de signalisation distincts les uns des autres, et d'autre part par des éléments de détection.

Comme il va de soi, l'invention ne se limite pas à la seule forme d'exécution de ce dispositif, décrite ci-dessus a titre d'exemple ; elle en embrasse, au contraire, toutes les variantes de réalisation.

C'est ainsi notamment que le nombre de séries d'éléments de signalisation, les dimensions de ceux-ci, qui peuvent être variables d'une série d'éléments à une autre, la structure des éléments de signalisation pouvant être constitués par des bandes présentant des lignes de rupture transversales.

## Revendications

1. Dispositif avertisseur de canalisations enterrées, comprenant au moins une série d'éléments de signalisation constitués par des tronçons de bandes allongées réalisées en un matériau souple et ayant une bonne résistance à la rupture, chaque serie de tronçons de bande étant logée à l'intérieur d'une enveloppe continue, caractérisé en ce que l'enveloppe continue est constituée par une gaine, et en ce qu'il comporte au moins deux gaines parallèles et solidaires l'une de l'autre, dont l'une (22) sert au logement d'une bande continue (27), formant élément de signalisation, de structure homogène sur toute sa longueur, réalisée en un matériau souple et ayant une bonne résistance à la rupture, et dont chacune des autres (22) sert au logement d'une série de tronçons de bandes (26).

2. Dispositif avertisseur selon la revendication 1, caractérisé en ce qu'il comprend trois gaines (22) parallèles solidaires les unes des autres, dont la gaine centrale sert de logement à une bande continue (27), et dont les deux gaines latérales servent de logements à deux séries d'éléments de signalisation constitués par des tronçons de bande (26).

3. Dispositif selon l'une des revendications 1 et 2, caractérisé en ce que les différents éléments de signalisation d'une même série sont constitués par plusieurs tronçons (26) de bandes séparés les uns des autres.

4. Dispositif selon l'une des revendications 1 et 2, caractérisé en ce que les différents éléments de signalisation d'une même série sont constitués par plusieurs tronçons d'une même bande séparés les uns des autres par des lignes de prédécoupe ou de rupture, régulièrement réparties sur la longueur de la bande.

5. Dispositif selon l'une quelconque des revendications 1 à 4, caractérisé en ce qu'il comprend au moins deux séries parallèles de tronçons (26) de bande, de même longueur unitaire ou non, logées dans un nombre correspondant de gaines (22) solidaires les unes des autres, les tronçons de bande (26) des différentes séries étant décalés longitudinalement les uns par rapport aux autres.

6. Dispositif selon l'une quelconque des revendications 1 à 5, caractérisé en ce que les gaines (22) contenant des éléments de signalisation (26, 27) sont réalisées à partir de deux rubans continus (23, 24) de matière synthétique, réunis l'un à l'autre après positionnement des éléments de signalisation par des soudures longitudinales (25), le nombre de soudures (25) étant égal au nombre de gaines augmenté de un.

7. Dispositif selon l'une quelconque des revendications 1 à 5, caractérisé en ce que les gaines, contenant des éléments de signalisation (26, 27), sont réalisées à partir d'un ruban continu de matière synthétique, replié sur lui-même le long d'une ligne centrale et longitudinale, après positionnement des éléments de signalisation, les deux épaisseurs du ruban étant réunies l'une à l'autre par des soudures longitudinales dont le nombre est égal au nombre de gaines.

8. Dispositif selon l'une quelconque des revendications 1 à 7, comprenant des éléments de détection, tels qu'éléments conducteurs, fil métallique isolé ou non, système magnétique, système électronique ou système inductif, caractérisé en ce que les éléments de détection sont disposés dans une gaine ou sous un film solidaire des gaines contenant les éléments de signalisation, ou dans la masse du matériau constitutif du dispositif avertisseur.

9. Dispositif selon la revendication 8, caractérisé en ce que les éléments de détection sont constitués soit par des éléments métalliques ou métallisés, soit par des éléments magnétiques, disposés de façon répétitive, selon un ordre et/ou à un pas, et/ou une orientation et/ou selon une répartition pré-établie, afin que ces éléments puissent être détectés d'une manière sélective par des détecteurs spécifiques conçus à cet effet.

## Claims

1. Warning device for buried conduits, comprising at least one series of indicator elements consisting of lengths of elongate strip produced from a flexible material and having a high breaking strength, each series of lengths of strip being housed inside a continuous cover, characterised in that the continuous cover consists of a sheath, and in that it has at least two parallel sheaths secured to each other, one of which (22) serves as a housing for a continuous strip (27), forming an indicator element, homogeneous in structure over its entire length, produced from a flexible material and having a high breaking strength, and each of the others (22) of which serves to house a series of lengths of strip (26).

2. Warning device according to Claim 1, characterised in that it comprises three parallel sheaths (22) secured to each other, of which the middle sheath serves as a housing for a continuous strip (27), and of which the two side sheaths serve as housings for two series of indicator elements consisting of sections of strip (26).

3. Device according to either of Claims 1 or 2, characterised in that the different indicator elements in any one series consist of several lengths (26) of strip separated from each other.

4. Device according to either of Claims 1 and 2, characterised in that the different indicator elements in any one series consist of several lengths of a single strip separated from each other by precutting or breaking lines, evenly distributed along the length of the strip.

5. Device according to any one of Claims 1 to 4, characterised in that it comprises at least two parallel series of lengths (26) of strip, of the same unit length or otherwise, housed in a corresponding number of sheaths (22) secured to each other, the lengths of strip (26) in the different series being offset longitudinally with respect to the others.

6. Device according to any one of Claims 1 to 5, characterised in that the sheaths (22) containing indicator elements (26, 27) are produced from two continuous ribbons (23, 24) of synthetic material, joined to each other after positioning of the indicator elements by longitudinal welds (25), the number of welds (25) being equal to the number of ribbons plus one.

7. Device according to any one of Claims 1 to 5, characterised in that the sheaths containing indicator elements (26, 27) are produced from a continuous ribbon of synthetic material, folded on itself along a central longitudinal line, after positioning of the indicator elements, the two thicknesses of the ribbon being joined to each other by longitudinal welds, the number of which is equal to the number of sheaths.

8. Device according to any one of Claims 1 to 7, comprising detection elements, such as conductive elements, metal wire, insulated or otherwise, a magnetic system, an electronic system or an induction system, characterised in that the detection elements are disposed in a sheath or underneath a film attached to the sheaths containing the indicator elements, or in the body of the material making up the warning device.

9. Device according to Claim 8, characterised in that the detection elements consist either of metal or metallised elements, or magnetic elements, disposed repetitively, in an order and/or at intervals, and/or in an orientation and/or distribution which are pre-established, so that these elements can be detected selectively by dedicated detectors designed for this purpose.

## Patentansprüche

1. Anzeigeeinrichtung für erdverlegte Kanalisationen, umfassend wenigstens eine Reihe von Signalelementen, die aus länglichen Bandabschnitten bestehen, welche aus einem biegeweichen Material hergestellt sind und eine gute Reißfestigkeit haben, wobei jede Bandabschnittreihe im Inneren einer kontinuierlichen Hülle angeordnet ist, dadurch **gekennzeichnet,** daß die kontinuierliche Hülle aus einer Ummantelung gebildet ist, und daß sie wenigstens zwei parallele fest miteinander verbundene Ummantelungen umfaßt, deren eine (22) zur Aufnahme eines kontinuierlichen, ein Signalelement bildenden Bandes (27) mit einer über seine ganze Länge homogenen Struktur dient, welches aus einem biegeweichen, eine gute Reißfestigkeit aufweisenden Material hergestellt ist, und deren jede andere (22) zur Aufnahme einer Reihe von Bandabschnitten (26) dient.

2. Anzeigeeinrichtung nach Anspruch 1, dadurch **gekennzeichnet,** daß sie drei parallele, fest miteinander verbundene Ummantelungen (22) umfaßt, deren mittlere zur Aufnahme eines kontinuierlichen Bandes (27) dient und deren beiden seitlichen Ummantelungen zur Aufnahme zweier Reihen von Signalelementen dienen, die durch Bandabschnitte (26) gebildet sind.

3. Einrichtung nach einem der Ansprüche 1 und 2, dadurch **gekennzeichnet**, daß die verschiedenen Signalelemente einer Reihe aus mehreren Bandabschnitten (26) bestehen, die voneinander getrennt sind.

4. Einrichtung nach einem der Ansprüche 1 und 2, dadurch **gekennzeichnet,** daß die verschiedenen Signalelemente einer Reihe aus mehreren Abschnitten eines Bandes gebildet sind, die voneinander durch Vorschnitt- oder Sollbruchlinien getrennt sind, welche mit regelmäßigen Abständen über die Bandlänge verteilt sind.

5. Einrichtung nach einem der Ansprüche 1 bis 4, dadurch **gekennzeichnet,** daß sie wenigstens zwei parallele Reihen von Bandabschnitten (26) von gleicher Einheitslänge oder ungleicher Länge umfaßt, die in einer entsprechenden Anzahl von miteinander fest verbundenen Umhüllungen (22) angeordnet sind, wobei die Bandabschnitte (26) der verschiedenen Reihen gegeneinander in Längsrichtung versetzt sind.

6. Einrichtung nach einem der Ansprüche 1 bis 5, dadurch **gekennzeichnet,** daß die die Signalelemente (26, 27) enthaltenden Umhüllungen (22) aus zwei kontinuierlichen Bahnen (23, 24) aus Kunststoff bestehen, die miteinander nach dem Einlegen der Signalelemente durch Längsschweißungen (25) verbunden worden sind, wobei die Anzahl der Längsschweißungen (25) der Anzahl der Umhüllungen, vermehrt um eins, entspricht.

7. Einrichtung nach einem der Ansprüche 1 bis 5, dadurch **gekennzeichnet,** daß die Signalelemente (26, 27) enthaltenden Umhüllungen aus einer kontinuierlichen Bahn aus Kunststoff gebildet sind, welche nach dem Einlegen der Signalelemente entlang einer Längsmittellinie auf sich selbst zurückgefaltet worden ist, wobei die beiden Bahnlagen miteinander durch Längsschweißungen verbunden sind, deren Anzahl der Anzahl der Umhüllungen gleich ist.

8. Einrichtung nach einem der Ansprüche 1 bis 7, umfassend Erfassungselemente (Detektionselemente), wie beispielsweise Leiterelemente, isolierter oder nicht isolierter Metalldraht, ein Magnetsystem, ein Elektroniksystem oder ein Induktivsystem, dadurch **gekennzeichnet,** daß die Erfassungselemente in einer Umhüllung oder unter einer mit den die Signalelemente enthaltenden Umhüllungen verbundenen Folie oder in der die Anzeigeeinrichtung bildenden Materialmasse angeordnet sind.

9. Einrichtung nach Anspruch 8, dadurch **gekennzeichnet,** daß die Erfassungselemente durch metallische oder metallisierte Elemente oder durch magnetische Elemente gebildet sind, die in einer Wiederholfolge mit einer Ordnung und/oder schrittweise, und/oder einer Ausrichtung und/oder gemäß einem vorgegebenen Abstandsmaß, angeordnet sind, so daß diese Elemente wahlweise mittels speziell dafür ausgelegter Detektoren erfaßt werden können.
